# EUROPÄISCHE PATENTSCHRIFT

(11) **EP 3 792 417 B1**
(45) Veröffentlichungstag und Bekanntmachung des Hinweises auf die Patenterteilung: **03.11.2021**
(21) Anmeldenummer: 19197550.7
(22) Anmeldetag: 16.09.2019
(51) Int. Cl.: E04B 1/78, E04B 1/80, C03B 17/02, F16L 59/065, C03C 17/09

(54) **ISOLIERELEMENT MIT GEWELLTER OBERFLÄCHE**
INSULATING ELEMENT WITH CORRUGATION
ÉLÉMENT ISOLANT À ONDULATION

(43) Veröffentlichungstag der Anmeldung: 17.03.2021
(73) Patentinhaber: V21 GmbH, 22765 Hamburg (DE)
(72) Erfinder: Wiedenroth, Roland, 22763 Hamburg (DE); Lang, Malte, 53949 Dahlem (DE)
(74) Vertreter: Samson & Partner Patentanwälte mbB

(56) Entgegenhaltungen:
- WO-A2-2011/020617
- CN-U- 201 476 362
- US-A1- 2010 330 316

## Beschreibung

### Gebiet der Erfindung

Die Erfindung betrifft ein Isolierelement zur Wärmeisolation sowie ein Wärmedämmelement mit mehreren solchen Isolierelementen.

### Technischer Hintergrund

Im Hinblick auf Energieeinsparung beim Heiz- und Kühlenergieverbrauch, beispielsweise von Gebäuden, sind effiziente Wärmedämmungen sinnvoll. Auch finden thermische Wärmedämmelemente in vielen Bereichen vom Kühlschrank bis hin zur Wärmedämmung von Raumkapseln Anwendung.

Es ist bekannt, dass sich mittels Vakuum eine gute thermische Isolierwirkung erzielen lässt, etwa durch eine evakuierte Doppelwandung. Dies findet Einsatz etwa bei Thermoskannen.

Hierbei muss ein evakuiertes Volumen baulich dem Unterdruck des Vakuums standhalten, was eine gewisse Wandstärke der Doppelwandung voraussetzt. Allerdings trägt eine zunehmende Wandstärke zur Wärmeleitung bei und ist daher mit Blick auf die isolierende Wirkung nachteilig.

US2010330316 A1 lehrt ein Wärmedämmelement mit Vakuumzellen mit gewellter Oberfläche.

### Kurzfassung der Erfindung

Die Erfindung ist durch die unabhängigen Ansprüche definiert. Ein Aspekt der Erfindung betrifft ein Isolierelement, ein weiterer Aspekt der Erfindung betrifft ein Wärmedämmelement mit solchen Isolierelementen und ein noch weiterer Aspekt betrifft ein Herstellungsverfahren für ein solches Isolierelement.

### Kurzbeschreibung der Zeichnung

Ausführungsbeispiele der Erfindung werden beispielhaft und unter Bezugnahme auf die beigefügte Figuren beschrieben, wobei
Figur 1 eine perspektivische Ansicht eines Beispiels eines Isolierelements mit Korrugation, und
Figur 2 eine perspektivische Ansicht eines Beispiels eines Wärmedämmelements mit mehreren Lagen mit Isolierelementen veranschaulichen.

### Detaillierte Beschreibung

Ein Isolierelement zur thermischen Isolation hat eine oder mehrere Vakuumzellen, wobei eine Vakuumzelle jeweils eine Wand mit einer oder mehreren Korrugationen besitzt. Ein Wärmedämmelement hat eine oder mehrere Lagen mit solchen Isolierelementen. Solche Isolierelemente lassen sich beispielsweise herstellen, indem Material geschmolzen und durch eine Öffnung in eine evakuierte Kammer als Hohlstrang eingepresst wird. Durch Einschnüren des Hohlstrangs wird eine (geschlossene) Vakuumzelle erzeugt. Durch Strecken der Vakuumzelle wird deren Wandstärke reduziert. Die Wand der Vakuumzelle wird korrugiert.

Evakuiert bzw. Vakuum ist so zu verstehen, dass bei manchen Ausgestaltungen ein in der Vakuumzelle (gasdicht) eingeschlossenes Fluid einen Druck aufweist, der deutlich geringer als der Atmosphärendruck bei Normalbedingungen ist. Bei manchen Ausgestaltungen herrscht in der Vakuumzelle ein Druck geringer als 10⁵ Pa, 10² PA, 10⁻¹ Pa, 10⁻² Pa, oder 10⁻⁴ Pa.

Mittels der Vakuumzelle(n) lässt sich eine gering Wärmeleitung und somit eine gut Isolierwirkung des Isolierelements erzielen. In einem Wärmedämmelement sind mehrere Isolierelemente, beispielsweise wie nachfolgend erläutert angeordnet, zusammengefasst, wodurch sich die praktische Verwendung von Isolierelementen, etwa zum thermischen Isolieren eines Gebäudes oder einer technischen Vorrichtung, vereinfacht.

Bei manchen Ausgestaltungen weist die Vakuumzelle Glas auf. Beispielsweise ist die Wand der Vakuumzelle mit Glas als Material hergestellt. Beispielsweise ist das Glas ein Borosilikatglas, Quarzglas oder Aluminiumsilikatglas. Bei manchen Ausgestaltungen ist die Vakuumzelle, zumindest deren Wand aus Kunststoff als Material gefertigt. Bei manchen Ausgestaltungen ist die Wand faserverstärkt, etwa mittels Karbonfasern oder Keflarfasern.

Zwar ist bekannt durch Korrugationen eine Biegeflexibilität, etwa von Metallrohrleitungen, also einem an sich schon elastischen oder flexiblen Material, entlang einer Längsrichtung zu erhöhen. Doch insbesondere im Fall von Glas als Material der Vakuumzelle handelt es sich um ein sprödes, zerbrechliches Material. Der vorliegenden Erfindung liegt unter anderem die Erkenntnis zugrunde, dass durch eine Korrugation sich ein Implosionsdruck der Vakuumzelle verbessern lässt, bzw. sich eine geringere Wandstärke der Vakuumzelle realisieren lässt, ohne dass die Vakuumzelle schon aufgrund ihres eingeschlossenen Vakuums Schaden nimmt. Somit lässt sich die Isolierwirkung eines Isolierelements und dementsprechend auch eines Wärmedämmelements verbessern. Auch lässt sich deren Gewicht und/oder Dicke reduzieren. Leichtere und/oder dünnere Wärmedämmelemente, etwa in Gestalt von Dämmplatten, sind beispielsweise bei der Dämmung von Wohngebäuden vorteilhaft.

Mit zunehmender Länge der Vakuumzelle lässt sich eine geringere spezifische Masse des Wärmedämmelements, sprich ein "leichteres" Wärmedämmelement erzielen. Beispielsweise hat die Vakuumzelle eine Länge von mehr als 5 mm, 10 mm, 20 mm, 50 mm, 100 mm, 200 mm, 300 mm oder 500 mm. Gleichzeitig oder auch unabhängig davon hat die Vakuumzelle bei manchen Ausgestaltungen eine Länge von höchstens 10 mm, 20 mm, 50 mm, 100 mm, 200 mm, 300 mm, 500 mm oder 800 mm. Kürzere Längen der Vakuumzellen erhöhen die Robustheit des Wärmedämmelements, etwa indem die Gefahr reduziert wird, dass Isolierelemente beim Biegen des Wärmedämmelement beschädigt werden. Außerdem sind Wärmedämmelement aus kürzeren Vakuumzellen einfacher zu verarbeiten, da z.B. beim Zersägen der Platte nur kurze Vakuumzellen beeinträchtigt werden. Hingegen lassen sich mit langen Vakuumzellen bessere Isoliereigenschaften erzielen.

Bei manchen Ausgestaltungen hat die Vakuumzelle eine Dicke, d.h. einen (Außen-) Durchmesser von mehr als 3 mm, 5 mm, 8 mm, 10 mm, 20 mm oder 30 mm. Gleichzeitig oder auch unabhängig davon hat die Vakuumzelle bei manchen Ausgestaltungen eine Dicke von höchstens 5 mm, 8 mm, 10 mm, 20 mm, 30 mm oder 50 mm.

Vorzugsweise ist eine Länge der Vakuumzelle größer als deren Dicke. Beispielsweise beträgt die Länge der Vakuumzelle etwa das Zweifache, Dreifache, Fünffache, Zehnfache, Zwanzigfache, Fünfzigfache oder Hundertfache ihrer Dicke.

Länge bzw. Längsrichtung sind in der vorliegenden Schrift entsprechend der Richtung beim Einpressen des geschmolzenen Materials und Strecken des Hohlstrangs bei der Herstellung des Isolierelements zu verstehen. Die Dicke der Vakuumzelle bzw. deren Durchmesser sind in einer Querschnittsfläche senkrecht hierzu zu verstehen.

Die Wand einer Vakuumzelle trägt zum Wärmetransport bei, sodass eine dünnere Wand der Vakuumzelle eine verbesserte Isolierung bedingt. Beispielsweise hat die Wand der Vakuumzelle eine Wandstärke von etwa 200 µm, 100 µm, 50 µm, 30 µm, 10 µm oder 5 µm.

Bei manchen Ausgestaltungen ist die Wand der Vakuumzelle röhrenförmig ausgestaltet. Bei manchen dieser Ausgestaltungen hat die Vakuumzelle eine im Wesentlichen zylinderförmige Gestalt, beispielsweise mit einer kreisförmigen, sechseckigen oder achteckigen Querschnittsfläche.

Bei manchen Ausgestaltungen ist die Vakuumzelle mit genau einer oder genau zwei oder einer Vielzahl Korrugationen ausgerüstet. Bei manchen Ausgestaltungen ist die Vakuumzelle schnitt- und berührpunktfrei hinsichtlich der Korrugation(en). Dadurch lässt sich das Isolierelementen einfach herstellen. Bei anderen Ausgestaltungen schneiden (d.h. kreuzen) oder berühren sich zwei oder mehrere Korrugationen oder auch ein und dieselbe Korrugation genau einmal oder mehrfach. Schnitt- und Berührungspunkte von Korrugationen können der Wand zusätzliche Stabilität verleihen, und zwar aufgrund des zweidimensionalen Korrugationverlaufs bezüglich der Wandfläche betrachtet.

Bei manchen Ausgestaltungen erstrecken sich eine oder mehrere oder sämtliche Korrugationen über die Gesamtlänge der Vakuumzelle. Eine Korrugation führt also im Wesentlichen von einem Ende zum anderen Ende der Vakuumzelle. Bei manchen Ausgestaltungen sind mehrere Korrugationen, insbesondere gleichmäßig, über die Gesamtlänge der Vakuumzelle verteilt angeordnet.

Bei manchen Ausgestaltungen umspannen (in radialer Richtung, also quer zur Längsrichtung) eine oder mehrere oder sämtliche Korrugationen die Vakuumzelle wenigstens einmal oder mehrfach.

Bei manchen Ausgestaltungen ist die Korrugation helixförmig. Beispielsweise erstreckt sich eine helixförmige Korrugation abschnittsweise oder auch im Wesentlichen vollständig über die Länge der Vakuumzelle. Bei manchen Ausgestaltungen hat die Wand der Vakuumzelle zwei helixförmige Korrugationen, die sich über einen gemeinsamen Längsabschnitt der Vakuumzelle erstrecken, beispielsweise in Gestalt zweier gleichsinniger Helices, die schnittpunktfrei umeinander laufen, oder in Gestalt zweier gegensinniger Helices, sodass die Wand Schnittpunkte (d.h. Kreuzungen) von Korrugationen aufweist. Gleichsinnige Helices lassen sich beispielsweise durch eine Rotationsbewegung gleichzeitig und damit effizient herstellen. Gegensinnige Helices schaffen eine vernetzte Struktur, welche die Stabilität der Vakuumzelle erhöht.

Bei manchen Ausgestaltungen ist die Vakuumzelle mit einer, mit zwei oder mit einer Vielzahl von ringförmigen Korrugationen ausgerüstet. Bei manchen Ausgestaltungen mit zwei oder mehr ringförmigen Korrugationen verlaufen die ringförmigen Korrugationen beispielsweise schnitt- und berührpunktfrei, beispielsweise in Ebenen, die orthogonal zur Längsachse der Vakuumzelle sind. Bei manchen anderen Ausgestaltungen mit zwei oder mehr ringförmigen Korrugationen weisen die Korrugationen Schnittpunkte auf, etwa wobei eine erste ringförmige Korrugation und eine zweite ringförmige Korrugation unterschiedlich schräg gegenüber einer Ebene, die orthogonal zur Längsachse ist, verlaufen.

Bei manchen Ausgestaltungen ist die Korrugation bzw. sind die Korrugationen (von außerhalb der Vakuumzelle betrachtet) konkav. Beispielsweise stellt eine Korrugation eine (lokale) Vertiefung, d.h. Verringerung des Außendurchmessers der Vakuumzelle dar (jedoch keine wesentliche Erhebung, d.h. lokale Durchmesservergrößerung). Beispielsweise hat die Korrugation von außen gesehen die Gestalt einer auf der Außenfläche der Vakuumzelle verlaufenden Rinne. Dadurch lassen sich kleinflächige gegenseitige Auflagepunkte vermeiden, wenn mehrere Isolierelemente unmittelbar aneinander grenzend in einem Wärmedämmelement angeordnet sind. Auch lassen sich Zwischenräume zwischen benachbart angeordneten Isolierelementen vermieden.

Bei manchen Ausgestaltungen hat die Wand beidseitig einer Korrugation und auch im Bereich der Korrugation eine im wesentlichen gleichbleibende Wandstärke, sodass die Wandstärke durch die Korrugation nicht gemindert und somit geschwächt ist. Eine auf der Außenseite der Vakuumzelle konkave Korrugation bedingt somit ein konvexes Profil auf der Innenseite der Vakuumzelle. Bei manchen Ausgestaltungen hat die Wand der Vakuumzelle eine (im Wesentlichen) einheitliche Wandstärke.

Bei manchen Ausgestaltungen stellt die Korrugation eine Vertiefung auf der äußeren Oberfläche des Isolierelements, genauer der Wand der Vakuumzelle dar, die mehr als das 1-fache, 10-fache, 100-fache oder 1000-fache der Wanddicke beträgt. Eine in diesen Größenordnungen zunehmende Verformung erhöht zunehmend die Festigkeit der Vakuumzelle.. Bei manchen Ausgestaltungen stellt die Korrugation eine Vertiefung auf der äußeren Oberfläche des Isolierelements, genauer der Wand der Vakuumzelle dar, die weniger als das 1-fache, 10-fache, 100-fache oder 1000-fache der Wanddicke beträgt.

Bei manchen Ausgestaltungen ist für eine bessere Isolierwirkung als Restgas im Vakuum der Vakuumzelle im Wesentlichen ein Edelgas vorgesehen.

Bei manchen Ausgestaltungen ist die Wand der Vakuumzelle mit einer reflektierenden, beispielsweise Infrarotlicht reflektierenden Beschichtung beschichtet, wobei beispielsweise die Außenfläche der Wand beschichtet ist.

Bei manchen Ausgestaltungen hat das Isolierelement zwei oder mehr Vakuumzellen. Tritt eine Verletzung einer Vakuumzelle auf, so behalten die übrigen Vakuumzellen des Isolierelements jeweils ihr Vakuum, sodass das Isolierelement insgesamt nur einen Teil seiner Isolierwirkung verliert. Beispielsweise sind die zwei oder mehr Vakuumzellen in einem Strang, ähnlich einer Perlenkette, entlang der Längsrichtung des Isolierelements angeordnet. Beispielsweise sind die hintereinander in einem Strang angeordneten Vakuumzellen im Wesentlichen zwischenraumfrei angeordnet.

Bei manchen Ausgestaltungen erfolgt zum Herstellen eines Isolierelements mit zwei oder mehr Vakuumzellen das Einschnüren des Hohlstrangs nur so weit, dass der innere Hohlraum des Hohlstrangs gasdicht verschlossen und somit eine Vakuumzelle ausgebildet wird, ohne den Hohlstrang zu durchtrennen.

Bei manchen Ausgestaltungen sind die Isolierelemente in einer Lage des Wärmedämmelements parallel zueinander ausgerichtet; beispielsweise ist eine Lage des Wärmedämmelements durch in einer Ebene parallel angeordnete Isolierelemente bestimmt. Dadurch lässt sich das Wärmedämmelement quer zur Längsrichtung der parallel angeordneten Isolierelemente krümmen, beispielsweise teilweise aufrollen, etwa um Rohrleitungen mit dem Wärmedämmelement thermisch zu isolieren.

Bei manchen Ausgestaltungen sind die Isolierelemente in einer Lage im Wesentlichen zwischenraumfrei angeordnet. Wärme kann das Wärmedämmelement somit nur durch die Isolierelemente hindurch passieren, sodass deren Isolierwirkung effizient ausgenutzt wird.

Bei manchen Ausgestaltungen sind in einer Lage des Wärmedämmelements die Isolierelemente gewissermaßen liegend angeordnet. Beispielsweise entspricht die Dicke einer Lage im Wesentlichen der Dicke eines Isolierelements.

Bei manchen Ausgestaltungen sind in einer Lage des Wärmedämmelements zwei oder mehr Isolierelemente (entlang ihrer Längsrichtung) in einer Reihe angeordnet. Dadurch lassen sich Wärmedämmelemente mit einer gewünschten Länge erzeugen, die länger als die Länge der einzelnen Isolierelemente sind.

Bei manchen Ausgestaltungen sind wenigstens zwei (in Querrichtung) benachbarte Isolierelemente in Längsrichtung versetzt zueinander angeordnet, und zwar um einen Versatz verschieden von der Länge einer Vakuumzelle oder einem Vielfachen hiervon. Dadurch sind benachbarte Vakuumzelle entlang ihrer Längsrichtung versetzt angeordnet, sodass Wärmebrücken senkrecht hierzu vermieden werden.

Bei manchen Ausgestaltungen hat das Wärmedämmelement zwei oder mehr Lagen mit Isolierelementen, wobei die Isolierelemente benachbarter Lagen parallel zueinander ausgerichtet sind. Beispielsweise sind die Isolierelemente einer Lage relativ zu den Isolierelementen einer benachbarten Lage in einer dichtesten Packung angeordnet. Beispielsweise überlappen sich hierbei benachbarter Lagen, in dem Isolierelemente einer Lage in Zwischenräume zwischen Isolierelementen einer benachbarten Lage hineinragen. Dadurch lässt sich ein homogener Aufbau des Wärmedämmelements erzielen und Wärmebrücken zwischen den Lagen vermeiden.

Bei manchen Ausgestaltungen sind in einer Lage des Wärmedämmelements die Isolierelemente bündig zueinander angeordnet. Bei manchen dieser Ausgestaltungen sind die jeweils bündig angeordneten Isolierelemente benachbarter Lagen zueinander versetzt angeordnet.

Bei manchen Ausgestaltungen sind zwei oder mehr Lagen zu einem Paket zusammengefasst, wobei das Wärmedämmelement wenigstens zwei Pakete umfasst. Beispielsweise sind zwei oder mehr Pakete übereinander gelagert angeordnet, sodass das Wärmedämmelement eine Anzahl von Lagen sitzt, die der Summe der Lagen der übereinander gelagerten Pakete entspricht.

Bei manchen Ausgestaltungen sind die Isolierelemente einzelner Pakete des Wärmedämmelements jeweils bündig zueinander und versetzt gegenüber den Isolierelementen benachbarter Pakete angeordnet.

Bei manchen Ausgestaltungen ist zwischen wenigstens zwei benachbarten Lagen des Wärmedämmelements jeweils eine Infrarotlicht reflektierenden Schicht vorgesehen, beispielsweise in Gestalt einer zwischen dem benachbarten Lage angeordneten Folie.

Bei manchen Ausgestaltungen ist das Wärmedämmelement mit einem Stützelement ausgerüstet, um die Isolierelemente vor mechanischen Belastungen, beispielsweise Durchbiegen oder Eindringen von Fremdkörpern, zu schützen. Beispielsweise umfasst das Stützelement eine Kunststoff-, Hartpapier-, Holz- oder Metalllage, die im Wesentlichen die Isolierelemente des Wärmedämmelements bedeckt.

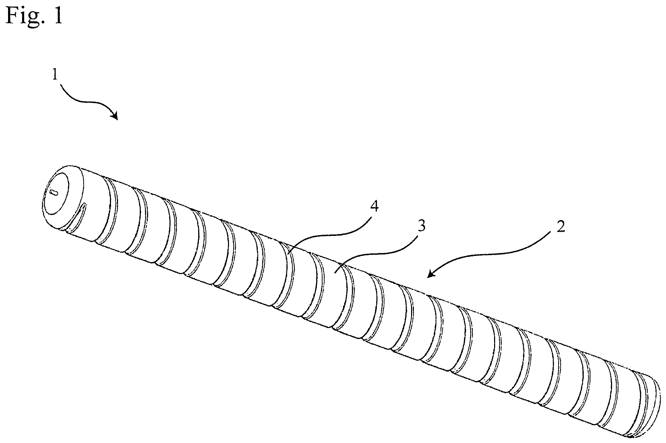

Figur 1 zeigt ein Beispielisolierelement 1 aus Glas zur thermischen Isolation mit genau einer Vakuumzelle 2. Eine Wand 3 der Vakuumzelle 2 ist röhrenförmig aus einem Hohlstrang hergestellt, der bei der Herstellung an beiden Enden der Vakuumzelle 2 eingeschnürt wurde, um die Vakuumzelle 2 gasdicht zu verschließen. Dies erfolgte unter Vakuum, sodass in der Vakuumzelle 2 ein Isoliervakuum herrscht.

Die (Glas-) Wand 3 ist mit einer helixförmigen Korrugation 4 versehen, die sich über die gesamte Länge der Vakuumzelle 2 erstreckt. Die Vakuumzelle 2 hat durchgehend eine im Wesentlichen konstante Wandstärke, die sich beim Herstellen des Isolierelements 1 aus einem Hohlstrang durch geeignetes Strecken einstellen lässt. Abgesehen von den jeweils lokalen Deformationen entlang der Korrugation 4 hat die Wand 3 durchgehend einen kreisförmigen Querschnitt.

Die Korrugation 4 verleiht der Wand 3 zusätzliche mechanische Stabilität, die die Vakuumzelle 2 ohne die Korrugationen 4 nicht hätte. Damit ist das Isolierelement 1 robuster gegen äußere mechanische Einwirkungen und/oder lässt sich dünnwandiger realisieren als vergleichbare Isolierelemente ohne Korrugation.

Die Korrugation 4 der Vakuumzelle 2 wird hergestellt, indem die Wand 3 entlang der gewünschten Bahn der Korrugation 4 mit einem Laser lokal erhitzt wird, sodass die Korrugation 4 hierbei durch eine Durchbiegung der Wand 3 nach innen entsteht. Von außen betrachtet ist die Korrugation 4 konkav ausgestaltet und vergrößert also den Durchmesser der Vakuumzelle 2 nicht. Die Korrugation 4 wird bei diesem Beispiel also materialabtragsfrei und formwerkzeugfrei hergestellt.

Um die Isolierwirkung zu erhöhen, lässt sich beispielsweise die Wand 3 mit einer Infrarotlicht reflektierenden Beschichtung versehen, beispielsweise in dem eine dünne Metallschicht aufgedampft wird.

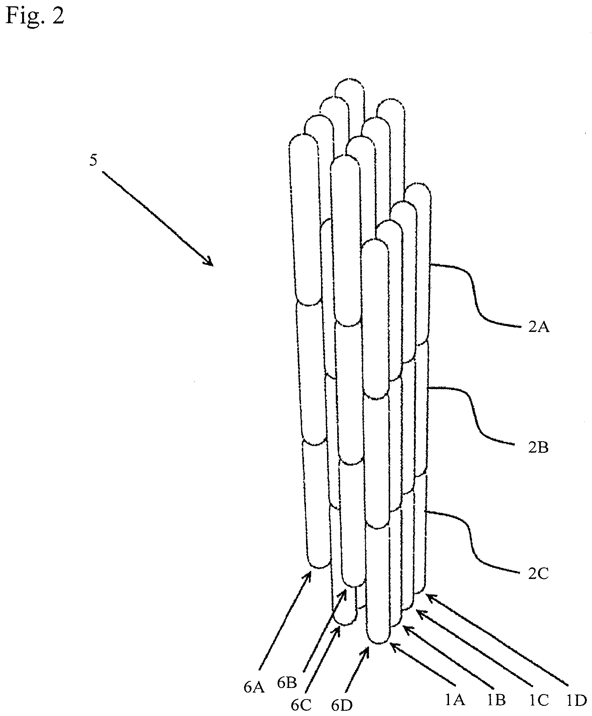

Figur 2 zeigt eine perspektivische Ansicht eines Abschnitts eines Wärmedämmelements 5 mit vier Lagen 6A, 6B, 6C, 6D, wobei in jeder Lage 6A, 6B, 6C, 6D Isolierelemente 1A, 1B, 1C, 1D parallel zueinander in einer Ebene und direkt aneinandergrenzend, also zwischenraumfrei angeordnet sind. Die Isolierelemente 1A, 1B, 1C, 1D unterscheiden sich von dem in Figur 1 gezeigten dadurch, dass sie (in Längsrichtung) jeweils drei einzelne Vakuumzellen 2A, 2B, 2C zusammenhängend in einem Strang besitzen. Die Isolierelemente 1A, 1B, 1C, 1D wurden aus einem Hohlstrang geschmolzenen Materials, beispielsweise Glas, hergestellt, wobei der Hohlstrang entlang eines Isolierelements 1A, 1B, 1C, 1D an zwei Stellen derart eingeschnürt wurde, dass sich insgesamt drei mechanisch verbundene Vakuumzellen 2A, 2B, 2C ausbilden, die jeweils separierte Vakuumvolumen bereitstellen, d. h. ein Gasaustausch zwischen den Vakuumzellen 2A, 2B, 2C oder zwischen einer Vakuumzelle 2A, 2B, 2C und der Umgebung findet nicht statt.

Bei der Herstellung solcher Isolierelemente 1A, 1B, 1C, 1D wird der Hohlstrang am Ende des Isolierelements gewissermaßen verstärkt eingeschnürt und somit aufgetrennt. So lässt sich durch eine geeignete Abfolge von weniger starken Einschnürungen und verstärkten Einschnürungen auf einfache Weise eine gewünschte Anzahl von Vakuumzellen pro Isolierelement erzielen und auch eine Länge der Vakuumzellen einstellen.

Korrugationen der Wände der Vakuumzellen sind zwecks Übersichtlichkeit in Figur 2 nicht dargestellt, gleichwohl ist jede der Vakuumzellen 2A, 2B, 2C jeweils mit einer Korrugation wie bei Figur 1 erläutert ausgerüstet. Weitere nicht gezeichnete Beispielisolierelemente unterscheiden sich hiervon lediglich in der Gestalt der Korrugation(en), wobei die verschiedenen zuvor beschriebenen Ausgestaltungen hinsichtlich der Korrugation(en) zur Anwendung kommen.

Zurückkehrend zu Figur 2 muss man sich das Wärmedämmelement 5 entlang von beiden Raumdimensionen der Lagen 6A, 6B, 6C, 6D durch weitere unmittelbar anschließende Isolierelemente 1A, 1B, 1C, 1D fortgesetzt denken, d.h. in Längsrichtung folgen den dargestellten Isolierelementen 1A, 1B, 1C, 1D (entlang einer Reihe) ein oder mehrere weitere Isolierelemente. Ebenso folgen in der Ebene der jeweiligen Lage 6A, 6B, 6C, 6D gesehen, jeweils seitlich benachbart weitere Isolierelemente.

Bei dem in Figur 2 gezeigten Wärmedämmelement 5 sind die Isolierelemente 1A, 1B, 1C, 1D einer Lage 6A, 6B, 6C, 6D jeweils bündig zueinander ausgerichtet, wobei Isolierelemente 1A, 1B, 1C, 1D benachbarter Lagen 6A, 6B, 6C, 6D entlang der Längsrichtung der Isolierelemente 1A, 1B, 1C, 1D versetzt angeordnet sind, beispielsweise um die Hälfte der Länge einer Vakuumzelle 2A, 2B, 2C. Bei anderen Beispielen sind benachbarte Isolierelemente 1A, 1B, 1C, 1D in einer Lage 6A, 6B, 6C, 6D und/oder gegenüber denen angrenzender Lagen 6A, 6B, 6C, 6D nicht-bündig angeordnet, beispielsweise regelmäßig oder unregelmäßig/zufällig variierend.

Dadurch dass das Wärmedämmelement 5 aus einzelnen Isolierelementen 1A, 1B, 1C, 1D mit jeweils vakuummäßig unabhängigen Vakuumzellen 2A, 2B, 2C aufgebaut ist, werden im Falle einer mechanischen Einwirkung auf das Wärmedämmelement 5, wie beispielsweise ein Stoß, Bohren eines Loches oder durch eindringende spitze Gegenstände (z. B. durch einen Nagel), nur lokal Vakuumzellen 2A, 2B, 2C beschädigt und das Wärmedämmelement 5 verliert insgesamt betrachtet nur wenig an seiner isolierenden Wirkung.

Bezugnehmend auf die Figuren 1 und 2 seien nachfolgend Beispielherstellungsverfahren für die zuvor beschriebenen Isolierelemente und Wärmedämmelemente erläutert. Ein Material, beispielsweise Glas oder Kunststoff, wird geschmolzen und in eine evakuierte Kammer eingepresst. Beispielsweise wird das Material in einem kontinuierlichen Vorgang durch eine Form hindurch in die Kammer gepresst. Diese Form bildet beispielsweise einen Hohlstrang oder mehrere Hohlstränge ab, sodass ein oder mehrere Hohlstränge aus dieser Form austreten, die einen entsprechenden Querschnitt, beispielsweise kreisförmig, sechseckig oder achteckig, aufweisen. Bei manchen Beispielen erlaubt die Form also eine gleichzeitige Herstellung mehrerer Hohlstränge. Nachfolgend wird für bessere Übersichtlichkeit darstellungsmäßig nur auf einen Hohlstrang eingegangen.

Die Kammer ist auf das gewünschte Vakuum, das später in den Vakuumzellen der Isolierelemente herrschen solle, evakuiert oder kann beispielsweise noch einen Restdruck spezieller Gase, etwa Edelgase, oder von Luft aufweisen.

Das zu einem Hohlstrang geformte Material wird nach Austritt aus der Form mechanisch gestreckt, um eine (gewünschte dünne und gleichmäßige) Wanddicke zu erzielen.

Um mehrere Vakuumzellen pro Isolierelement zu erzeugen wird der (gestreckte) Hohlstrang in regelmäßigen Abständen, beispielsweise mittels mechanischer Vorrichtungen, etwa durch Flügelräder, so eingeschnürt, d. h. im Durchmesser lokal verjüngt, dass das innere Volumen des Hohlstrangs verschlossen wird, sich also eine Vakuumzelle bildet, in der dann der Druck der evakuierten Kammer konserviert wird. Die Reihenfolge der Verfahrensschritte kann dabei auch anders gestaltet sein: erst einschnüren, dann strecken, oder erst strecken und dann einschnüren. Das Material kühlt im weiteren Verlauf ab und verhärtet sich.

Um eine Lage mit Isolierelementen des Wärmedämmelements herzustellen, können eine Vielzahl Isolierelemente separat hergestellt werden und anschließend wie zuvor beschrieben in einer Ebene angeordnet werden. Beispielsweise können die Isolierelemente miteinander verklebt werden oder durch eine gemeinsame Hülle gehalten oder eingegossen werden.

Bei manchen Beispielen können mehrere oder auch sämtliche Isolierelemente einer Lage gleichzeitig in der Kammer gepresst werden, sodass benachbarte Isolierelemente schon in der Kammer aneinanderschmelzen sich somit eine zusammenhängende flächige Struktur paralleler Isolierelemente ausbildet. Dadurch lässt sich in einem Einpressvorgang eine gesamte Lage oder eine Teillage erzeugen.

Um ein mehrlagiges Wärmedämmelement herzustellen, werden mehrere Lagen mit Isolierelementen übereinander gelegt und zum Wärmedämmelement verbunden, etwa lose aufeinander gelegt und von einer Hülle des Wärmedämmelements zusammengefasst, miteinander verklebt oder unter Einfluss von Hitze aneinandergeschmolzen.

Bei Herstellungsvarianten mit Aneinanderschmelzen lassen sich in Abhängigkeit von der Temperatur und der daraus resultierenden Viskosität des Materials Kontaktflächen zwischen benachbarten Isolierelementen größer oder kleiner gestalten. Sind beispielsweise die Isolierelemente bereits nahezu ausgehärtet wenn sie nebeneinander oder übereinandergelegt werden, verändern sie ihre Form kaum, so dass die Kontaktflächen klein bleiben und der Querschnitt der Isolierelemente im Wesentlichen kreisförmig bleibt.

Bei manchen Beispielen werden die Lagen eines Wärmedämmelements mit einem Schutzmantel versehen und/oder die Zwischenräume zwischen den Lagen bzw. Isolierelementen mit einem Bindematerial ausgefüllt. Als Bindematerial und/oder Schutzmantel sind beispielsweise Kunststoff, etwa Styropor, Flüssigholz oder Epoxidharze geeignet. Beispielsweise sind die Materialeigenschaften der Schutzhülle so gewählt, dass sie eine für den geplanten Einsatz geeignete Funktion erfüllen, etwa als Haftvermittler für Putze.

Bei manchen Beispielen wird die Schutzhülle der Wärmedämmelemente mit einem umlaufenden Profil versehen, beispielsweise ein Nut-und-Feder-Profil, um mehrere Wärmedämmelemente wärmebrückenfrei aneinander reihen zu können oder auch um diese gegenseitig durch Formschluss die halten oder zu verbinden.

## Patentansprüche

1. Isolierelement (1, 1A, 1B, 1C) zur thermischen Isolation mit einer Vakuumzelle (2, 2A, 2B, 2C), wobei die Vakuumzelle (2, 2A, 2B, 2C) eine Wand (3) mit einer Korrugation (4) aufweist.

2. Isolierelement (1, 1A, 1B, 1C) nach Anspruch 1, wobei die Wand röhrenförmig ausgestaltet ist.

3. Isolierelement (1, 1A, 1B, 1C) nach Anspruch 1 oder 2, wobei die Korrugation (4) helixförmig ist.

4. Isolierelement (1, 1A, 1B, 1C) nach einem der vorhergehenden Ansprüche, wobei sich die Korrugation (4) entlang der gesamten Länge der Wand (3) erstreckt und/oder die Wand (3) wenigstens einmal vollständig umspannt.

5. Isolierelement (1, 1A, 1B, 1C) nach einem der vorhergehenden Ansprüche, wobei die Vakuumzelle (2, 2A, 2B, 2C) einen kreisförmigen, sechseckigen oder achteckigen Querschnitt aufweist.

6. Isolierelement (1, 1A, 1B, 1C) nach einem der vorhergehenden Ansprüche, wobei die Vakuumzelle (2, 2A, 2B, 2C) Glas aufweist.

7. Isolierelement (1, 1A, 1B, 1C) nach einem der vorhergehenden Ansprüche, wobei die Wand (3) eine einheitliche Wandstärke aufweist.

8. Isolierelement (1, 1A, 1B, 1C) nach einem der vorhergehenden Ansprüche, wobei die Korrugation (4) konkav ausgestaltet ist.

9. Isolierelement (1, 1A, 1B, 1C) nach einem der vorstehenden Ansprüche, wobei die Wand (3) eine Infrarotlicht reflektierende Beschichtung aufweist.

10. Wärmedämmelement (5), das eine Lage (6A, 6B, 6C, 6D) mit Isolierelementen (2, 2A, 2B, 2C) nach einem der Ansprüche 1 bis 9 aufweist.

11. Wärmedämmelement (5) nach Anspruch 10, wobei die Lage (6A, 6B, 6C, 6D) parallel angeordnete Reihen von Isolierelementen aufweist.

12. Wärmedämmelement (5) nach Anspruch 10 oder 11, wobei bei zwei benachbarten Reihen von Isolierelemente (2, 2A, 2B, 2C) Isolierelemente (2, 2A, 2B, 2C) unterschiedlicher Reihen in Längsrichtung versetzt zueinander angeordnet sind.

13. Wärmedämmelement (5) nach einem der Ansprüche 10-12, das zwei oder mehr Lagen (6A, 6B, 6C, 6D) aufweist, wobei die Isolierelemente (1, 1A, 1B, 1C, 1D) benachbarter Lagen (6A, 6B, 6C, 6D) parallel zueinander ausgerichtet sind.

14. Wärmedämmelement (5) nach Anspruch 13, wobei die Isolierelemente (1, 1A, 1B, 1C, 1D) benachbarter Lagen (6A, 6B, 6C, 6D) in einer dichtesten Packung angeordnet sind.

15. Verfahren zur Herstellung eines Isolierelements, umfassend:
- Schmelzen von Material,
- Einpressen des geschmolzenen Materials durch eine Öffnung in eine evakuierte Kammer als Hohlstrang,
- Einschnüren des Hohlstrangs, sodass eine Vakuumzelle (2, 2A, 2B, 2C) ausgebildet wird,
- Strecken des Strangs, so dass die Wandstärke der Vakuumzelle (2, 2A, 2B, 2C) reduziert wird, und
- Korrugieren der Wand (3) der Vakuumzelle (2, 2A, 2B, 2C).

## Claims

1. Insulating element (1, 1A, 1B, 1C) for thermal insulation, comprising a vacuum cell (2, 2A, 2B, 2C), wherein the vacuum cell (2, 2A, 2B, 2C) has a wall (3) which has a corrugation (4).

2. Insulating element (1, 1A, 1B, 1C) according to claim 1, wherein the wall is tubular.

3. Insulating element (1, 1A, 1B, 1C) according to either claim 1 or claim 2, wherein the corrugation (4) is helical.

4. Insulating element (1, 1A, 1B, 1C) according to any of the preceding claims, wherein the corrugation (4) extends along the entire length of the wall (3) and/or completely encompasses the wall (3) at least once.

5. Insulating element (1, 1A, 1B, 1C) according to any of the preceding claims, wherein the vacuum cell (2, 2A, 2B, 2C) has a circular, hexagonal or octagonal cross section.

6. Insulating element (1, 1A, 1B, 1C) according to any of the preceding claims, wherein the vacuum cell (2, 2A, 2B, 2C) comprises glass.

7. Insulating element (1, 1A, 1B, 1C) according to any of the preceding claims, wherein the wall (3) has a uniform wall thickness.

8. Insulating element (1, 1A, 1B, 1C) according to any of the preceding claims, wherein the corrugation (4) is concave.

9. Insulating element (1, 1A, 1B, 1C) according to any of the preceding claims, wherein the wall (3) has a coating which reflects infrared light.

10. Heat insulation element (5) which has a layer (6A, 6B, 6C, 6D) comprising insulating elements (2, 2A, 2B, 2C) according to any of claims 1 to 9.

11. Heat insulation element (5) according to claim 10, wherein the layer (6A, 6B, 6C, 6D) comprises rows of insulating elements arranged in parallel.

12. Heat insulation element (5) according to either claim 10 or claim 11, wherein in the case of two adjacent rows of insulating elements (2, 2A, 2B, 2C), insulating elements (2, 2A, 2B, 2C) of different rows are arranged so as to be offset with respect to one another in the longitudinal direction.

13. Heat insulation element (5) according to any of claims 10-12, which comprises two or more layers (6A, 6B, 6C, 6D), wherein the insulating elements (1, 1A, 1B, 1C, 1D) of adjacent layers (6A, 6B, 6C, 6D) are aligned in parallel with one another.

14. Heat insulation element (5) according to claim 13, wherein the insulating elements (1, 1A, 1B, 1C, 1D) of adjacent layers (6A, 6B, 6C, 6D) are arranged in a closest packing arrangement.

15. Method for producing an insulating element, comprising:
- melting material,
- pressing the molten material through an opening into an evacuated chamber as a hollow strand,
- constricting the hollow strand, such that a vacuum cell (2, 2A, 2B, 2C) is formed,
- stretching the strand, such that the wall thickness of the vacuum cell (2, 2A, 2B, 2C) is reduced, and
- corrugating the wall (3) of the vacuum cell (2, 2A, 2B, 2C).

## Revendications

1. Elément isolant (1, 1A, 1B, 1C) pour l'isolation thermique avec une cellule à vide (2, 2A, 2B, 2C), dans lequel la cellule à vide (2, 2A, 2B, 2C) présente une paroi (3) avec une ondulation (4).

2. Elément isolant (1, 1A, 1B, 1C) selon la revendication 1, dans lequel la paroi est conçue en forme de tube.

3. Elément isolant (1, 1A, 1B, 1C) selon la revendication 1 ou 2, dans lequel l'ondulation (4) est hélicoïdale.

4. Elément isolant (1, 1A, 1B, 1C) selon l'une quelconque des revendications précédentes, dans lequel l'ondulation (4) s'étend le long de toute la longueur de la paroi (3) et/ou enserre la paroi (3) entièrement au moins une fois.

5. Elément isolant (1, 1A, 1B, 1C) selon l'une quelconque des revendications précédentes, dans lequel la cellule à vide (2, 2A, 2B, 2C) présente une section transversale circulaire, hexagonale ou octogonale.

6. Elément isolant (1, 1A, 1B, 1C) selon l'une quelconque des revendications précédentes, dans lequel la cellule à vide (2, 2A, 2B, 2C) comprend du verre.

7. Elément isolant (1, 1A, 1B, 1C) selon l'une quelconque des revendications précédentes, dans lequel la paroi (3) présente une épaisseur de paroi uniforme.

8. Elément isolant (1, 1A, 1B, 1C) selon l'une quelconque des revendications précédentes, dans lequel l'ondulation (4) est conçue de façon concave.

9. Elément isolant (1, 1A, 1B, 1C) selon l'une quelconque des revendications précédentes, dans lequel la paroi (3) présente un revêtement réfléchissant la lumière infrarouge.

10. Elément thermo-isolant (5), qui présente une couche (6A, 6B, 6C, 6D) avec des éléments isolants (2, 2A, 2B, 2C) selon l'une quelconque des revendications 1 à 9.

11. Elément thermo-isolant (5) selon la revendication 10, dans lequel la couche (6A, 6B, 6C, 6D) présente des rangées d'éléments isolants disposées parallèlement.

12. Elément thermo-isolant (5) selon la revendication 10 ou 11, dans lequel pour deux rangées voisines d'éléments isolants (2, 2A, 2B, 2C), des éléments isolants (2, 2A, 2B, 2C) de différentes rangées sont disposés de manière décalée les uns des autres dans la direction longitudinale.

13. Elément thermo-isolant (5) selon l'une quelconque des revendications 10-12, qui présente deux couches (6A, 6B, 6C, 6D) ou plus, dans lequel les éléments isolants (1, 1A, 1B, 1C, 1D) de couches (6A, 6B, 6C, 6D) voisines sont orientés parallèlement les uns aux autres.

14. Elément thermo-isolant (5) selon la revendication 13, dans lequel les éléments isolants (1, 1A, 1B, 1C, 1D) de couches (6A, 6B, 6C, 6D) voisines sont disposés en un tassement très dense.

15. Procédé pour fabriquer un élément isolant, comprenant :
- la fusion de matériau,
- l'enfoncement du matériau fondu à travers une ouverture dans une chambre en forme de barre creuse dans laquelle le vide est créé,
- le rétrécissement de la barre creuse, de sorte qu'une cellule à vide (2, 2A, 2B, 2C) est réalisée,
- l'étirement de la barre, de sorte que l'épaisseur de paroi de la cellule à vide (2, 2A, 2B, 2C) est réduite, et
- l'ondulation de la paroi (3) de la cellule à vide (2, 2A, 2B, 2C).
